# EUROPÄISCHE PATENTSCHRIFT

(11) **EP 4 566 772 B1**
(45) Veröffentlichungstag und Bekanntmachung des Hinweises auf die Patenterteilung: **10.06.2026**
(21) Anmeldenummer: 24210659.9
(22) Anmeldetag: 04.11.2024
(51) Int. Cl.: B25J 17/02

(54) **WINKELAUSGLEICHSEINHEIT MIT STEUER- UND VERRIEGELUNGSKOLBEN, SPANN- UND/ODER GREIFVORRICHTUNG UND HANDHABUNGSVORRICHTUNG**
ANGLE COMPENSATION UNIT WITH CONTROL AND LOCKING PISTON, CLAMPING AND/OR GRIPPING DEVICE AND HANDLING DEVICE
UNITÉ DE COMPENSATION D'ANGLE DOTÉE DE PISTONS DE COMMANDE ET DE VERROUILLAGE, DISPOSITIF DE SERRAGE ET/OU DE PRÉHENSION ET DISPOSITIF DE MANIPULATION

(30) Priorität: 29.11.2023 DE 102023133422
(43) Veröffentlichungstag der Anmeldung: 11.06.2025
(73) Patentinhaber: SCHUNK SE & Co. KG Spanntechnik Greiftechnik Automatisierungstechnik, 74348 Lauffen am Neckar (DE)
(72) Erfinder: Uhler, Johannes, 74930 Ittlingen (DE); Barta, Daniel, 74199 Untergruppenbach (DE)
(74) Vertreter: DREISS Patentanwälte PartG mbB

(56) Entgegenhaltungen:
- DE-B3- 102018 118 446
- US-A- 4 702 667

## Beschreibung

Die Erfindung betrifft eine Winkelausgleichseinheit, eine Spann- und/oder Greifvorrichtung und eine Handhabungsvorrichtung.

Ausgleichseinheiten, insbesondere Winkelausgleichseinheiten, dienen zur Anordnung an eine Automatisierungsanlage, insbesondere zur Anordnung zwischen einem Handhabungsgerät und einem Werkzeug, mit einem Grundteil und mit einem Ausgleichsteil, wobei das Ausgleichsteil gegenüber dem Grundteil aus einer Grundposition entlang wenigstens einer Ausgleichsrichtung in eine Ausgleichsposition bewegbar angeordnet ist, und mit Federmitteln zur Rückstellung des Ausgleichsteils aus der Ausgleichsposition in die Grundposition. Das Grundteil kann dabei zur Befestigung an einem Handhabungsgerät bzw. eines Werkzeugs ausgebildet sein und dass Ausgleichsteil kann zur Befestigung eines Werkzeugs bzw. eines Handhabungsgeräts ausgebildet sein.

Eine bekannte Ausführungsform einer Ausgleichseinheit zur Realisierung einer Winkelausgleichsbewegung ist die Ausgleichseinheit AGE-U der Anmelderin, die in gängigen Katalogmaterialien gezeigt ist.

Aus der DE 10 2021 126 756 A1 ist eine Kollisionsschutzeinrichtung für einen Bearbeitungskopf einer Laserbearbeitungsmaschine mit einem Kardangelenk bekannt. Aus der DE 10 2016 212 141 A1, DE 36 05 505 A1 und der DD 1 43 226 A1 sind ebenfalls Kollisionsschutzeinrichtungen bekannt. Aus der DE 10 2021 130 322 A1 ist eine kardanische Aufhängung einer Erfassungseinrichtung bekannt. Aus der DE 10 2020 100 435 A1 ist ein Roboterwerkzeug mit auswählbaren Nachgiebigkeitsmodi bekannt. Weitere Beispiele von Winkelausgleichseinheiten entsprechend des Stands der Technik sind aus der DE102018118446, der US4702667 sowie der CN113924458 bekannt.

Der Erfindung liegt die Aufgabe zugrunde, eine Winkelausgleichseinheit bereitzustellen, welche eine hohe Lastaufnahme aufweist.

Die der Erfindung zugrundeliegende Aufgabe wird durch eine Winkelausgleichseinheit mit den Merkmalen des Anspruchs 1 gelöst. Die Winkelausgleichseinheit weist ein Grundteil und ein Ausgleichsteil auf. Das Ausgleichsteil ist relativ zum Grundteil entlang wenigstens einer Ausgleichsrichtung um eine x-Achse und um eine y-Achse zwischen einer Grundposition und einer Ausgleichsposition verschwenkbar. Die y-Achse verläuft senkrecht zur x-Achse. Im Grundteil sind ein Lagerrahmen und ein Lagerflansch angeordnet. Der Lagerrahmen ist um Grundteil um die x-Achse drehbar gelagert. Der Lagerflansch ist im Lagerrahmen um die y-Achse drehbar gelagert. Die Kombination des Lagerrahmens und des Lagerflanschs basiert auf einer kardanischen Aufhängung. Der Lagerrahmen und Lagerflansch werden nachfolgend auch als "Kardangelenk" bezeichnet.

Aufgrund des Aufbaus des Lagerrahmens und des Lagerflanschs können Kräfte auf unterschiedliche Lagerkomponenten verteilt werden, sodass eine hohe Lastaufnahme, insbesondere von Axialkräften, sichergestellt ist.

In der Grundposition ist das Ausgleichsteil senkrecht zu einer z-Achse angeordnet. Die z-Achse verläuft senkrecht zur x-Achse und zur y-Achse. In der Ausgleichsposition ist das Ausgleichsteil nicht senkrecht, sondern schräg zur z-Achse angeordnet.

Die Winkelausgleichseinheit weist einen, insbesondere pneumatisch und/oder hydraulisch angetriebenen, Steuerkolben zum Steuern des Verschwenkmoments bzw. Auslösemoments auf, wobei der Steuerkolben entlang einer senkrecht zur x-Achse und zur y-Achse verlaufenden z-Achse zwischen einer unteren Steuerlage und einer oberen Freigabelage verschieblich ist. Um die Bewegung des Kardangelenks, insbesondere eine ungewollte Drehung um die x-Achse und die y-Achse und eine Bewegung des Ausgleichsteils beispielsweise durch eine Eigenmasse eines angeschraubten Aktuators in horizontaler Lage der Winkelausgleichseinheit zu unterbinden, ist der, insbesondere einfach wirkende, Steuerkolben vorgesehen, wodurch das Kardangelenk und damit das Ausgleichsteil erst ab einem Verschwenkmoment auslenkbar ist. Folglich muss die am Ausgleichsteil anliegende Kraft zunächst das Verschwenkmoment überwinden, um das Ausgleichsteil aus der Grundposition in die Ausgleichsposition zu verlagern.

Die Winkelausgleichseinheit weist ferner einen, insbesondere pneumatisch und/oder hydraulisch angetriebenen, Verriegelungskolben zum Verriegeln des Ausgleichsteils auf. Der Verriegelungskolben ist entlang der z-Achse zwischen einer oberen Entriegelungslage und einer unteren Verriegelungslage verschieblich. In der Verriegelungslage ist ein Winkelausgleich mittels des Ausgleichsteils nicht möglich. In der Entriegelungslage ist ein Winkelausgleich möglich.

Der Verriegelungskolben und der Steuerkolben sind derart gekoppelt, dass ein Verschieben des Verriegelungskolbens in die Verriegelungslage auch ein Verschieben des Steuerkolbens in die Steuerlage bewirkt. Dazu wird die Kraft des Verriegelungskolbens mittels des ersten Federmittels auf den Steuerkolben übertragen. Es ist auch denkbar, dass der Verriegelungskolben in der Verriegelungslage den Steuerkolben kontaktiert und somit die Kraft zur Verlagerung direkt überträgt. Folglich wird der Lagerflansch und damit das Ausgleichsteil mittels des Steuerkolbens verriegelt.

Das Grundteil weist vorzugsweise ein Anschlussgehäuse und/oder ein Kardangehäuse auf, wobei vorzugsweise das Kardangehäuse bewegungsfest mit dem Anschlussgehäuse verbunden, insbesondere verschraubt, ist. Es ist vorteilhaft, wenn der Lagerrahmen und der Lagerflansch im Kardangehäuse angeordnet sind. Es ist ferner vorteilhaft, wenn der Lagerrahmen im Kardangehäuse um die x-Achse drehbar gelagert ist. Das Anschlussgehäuse ist vorzugsweise einer Oberseite des Grundteils mittels eines Gehäusedeckels verschlossen.

Eine vorteilhafte Weiterbildung sieht vor, dass das Ausgleichsteil bewegungsfest mit dem Lagerflansch verbunden ist. Demnach wird die durch den Lagerrahmen und den Lagerflansch erzielte Bewegungsfreiheit am Ausgleichsteil bereitgestellt.

Es ist vorteilhaft, wenn der Lagerrahmen eine entlang der x-Achse verlaufende erste Drehachse und der Lagerflansch eine entlang der y-Achse verlaufende zweite Drehachse aufweist, und wobei die erste Drehachse und die zweite Drehachse in einer, senkrecht zur z-Achse verlaufenden, Drehachsenebene liegen. Aufgrund der Anordnung der Drehachsen in einer gemeinsamen Ebene bzw. der Anordnung des Lagerrahmens und des Lagerflanschs radial zur z-Achse nebeneinander baut die Winkelausgleichseinheit, insbesondere das Grundteil und/oder das Kardangehäuse, besonders flach.

Es ist ferner vorteilhaft, wenn der Lagerrahmen mittels entlang der x-Achse erstreckender, erster Drehbolzen im Grundteil, insbesondere im Kardangehäuse drehbar gelagert ist. Es ist zudem vorteilhaft, wenn der Lagerflansch mittels entlang der y-Achse erstreckender, zweiter Drehbolzen im Lagerrahmen drehbar gelagert ist. Die Drehbolzen stellen eine einfache Art der Lagerung des Lagerrahmens und/oder des Lagerflanschs dar.

Eine weitere vorteilhafte Ausbildung sieht vor, dass der Lagerrahmen, insbesondere senkrecht zur z-Achse, ringförmig ausgebildet ist. Vorzugsweise weist der Lagerrahmen eine Flanschaufnahme zur Aufnahme des Lagerflanschs auf. Der Lagerrahmen ist vorzugsweise an einer ersten Außenfläche, insbesondere konvex, abgerundet, wobei die Abrundung vorzugsweise in einem Querschnitt entlang der z-Achse verläuft bzw. sichtbar ist. In der ersten Außenfläche sind vorzugsweise erste Bolzenaufnahmen zur Aufnahme der ersten Drehbolzen vorgesehen.

Eine weitere vorteilhafte Ausbildung sieht vor, dass der Lagerflansch teilkugelförmig ausgebildet ist. Eine zweite Außenfläche des Lagerflanschs verläuft vorzugsweise in einem gegenüber der z-Achse mittleren Bereich entlang einer Kugeloberfläche. Der Lagerrahmen weist vorzugsweise eine zur z-Achse gerichtete Innenfläche auf, welche vorzugsweise konkav abgerundet ist. Der Lagerflansch kann der Innenfläche des Lagerrahmens geführt sein. Der mittlere Bereich des Lagerflanschs und der Lagerrahmen sind vorzugsweise komplementär zueinander ausgebildet. Im mittleren Bereich des Lagerflanschs sind vorzugsweise zweite Bolzenaufnahmen zur Aufnahme der zweiten Drehbolzen vorgesehen.

Eine Drehung um die z-Achse ist aufgrund der Drehbolzen unterdrückt. Ein translatorisches Verschieben des Lagerflansches und damit des Ausgleichsteil wird durch eine Kugelform an den äußeren Flächen des Lagerflansches bzw. Lagerrings sowie einer Halbkugelform im jeweils selben Durchmesser an den inneren Führungsflächen im Kardangehäuse und im Lagerring unterbunden. Diese kugelförmigen Kontaktflächen ermöglichen gleichzeitig weiterhin eine Rotation um die nicht durch Drehbolzen gesperrten Achsen, nämlich die x-Achse und die y-Achse, wodurch ein Winkelausgleich realisierbar ist.

Zur Rückstellung des Steuerkolbens in die Steuerlage ist vorzugsweise ein erstes Federmittel, insbesondere eine Druckfeder, vorgesehen. Folglich wird der Steuerkolben auch im energielosen Zustand in die Steuerlage bewegt und damit auch das Ausgleichsteil im energielosen Zustand in die Grundposition zurückgestellt.

Vorzugsweise weist der Steuerkolben eine Steuerfläche und der Lagerflansch eine Flanschfläche auf, welche zum Rückstellen des Ausgleichsteils in die Grundposition sich kontaktieren und zusammenwirken. Die Steuerfläche und/oder die Flanschfläche können eben, insbesondere senkrecht zur z-Achse in der Grundposition des Ausgleichsteils verlaufend, ausgebildet sein. Alternativ wird die Steuerfläche durch einen entlang der z-Achse hervorstehenden Dorn gebildet. Ferner wird alternativ die Flanschfläche durch eine entlang der z-Achse zurückstehende Tasche gebildet. Es ist auch denkbar, dass die Tasche am Steuerkolben und der Dorn am Lagerflansch angeordnet sind.

Es ist vorteilhaft, wenn der Dorn und/oder die Tasche kegelförmig und/oder komplementär zueinander ausgebildet sind. Die Kegelflächen ermöglichen eine größere Kraftübertragung und damit ein höheres Verriegelungsmoment. Vorzugsweise verjüngt sich die Tasche weg vom Dorn. Vorzugsweise verjüngt sich der Dorn hin zur Tasche.

Es ist ferner vorteilhaft, wenn der Dorn und/oder die Tasche als, insbesondere zum Steuerkolben und/oder zum Lagerflansch separat ausgebildete, Einsätze ausgebildet sind. Demnach können der Dorn und/oder die Tasche aus einem anderen Material als der Steuerkolben und/oder der Lagerflansch ausgebildet sein. Beispielsweise können so die Einsätze eine höhere Verschleißfestigkeit im Gegensatz zu den weiteren Bauteilen aufweisen, wobei die anderen Bauteile hinsichtlich einer leichten Bauweise ausgelegt sind. Die Einsätze können vorzugsweise als Verschleißeinsätze ausgebildet sein.

Vorzugsweise begrenzen das Grundteil, insbesondere das Anschlussgehäuse, und der Steuerkolben eine mit Druck beaufschlagbare erste Druckkammer. Bei Druckbeaufschlagung der ersten Druckkammer wird der Steuerkolben zusätzlich zur Federkraft des ersten Federmittels aus der Freigabelage in die Steuerlage bewegt, sodass das Ausgleichsteil in die Grundposition verlagert wird. Zum Verschwenken des Ausgleichsteils in die Ausgleichsrichtung muss zunächst das durch den Steuerkolben, und insbesondere das erste Federmittel, bewirkte Verschwenkmoment überwunden werden. Damit ist eine stufenlose Einstellung des Verschwenkmoments möglich. Eine derartig stufenlose Einstellung ist besonders bei horizontalen Anwendungen oder Massenschwerpunkten der Werkzeuge, die nicht auf einer z-Achse mit dem Ausgleichsteil liegen, wichtig.

Zur Rückstellung des Verriegelungskolbens in die Entriegelungslage ist ein zweites Federmittel, insbesondere zwei Druckfedern, vorgesehen. Folglich wird der Verriegelungskolben im energielosen Zustand in die Entriegelungslage bewegt und damit ist das Ausgleichsteil im energielosen Zustand in die Ausgleichsposition verschwenkbar. Es ist vorteilhaft, wenn das Grundteil, insbesondere das Anschlussgehäuse und der Gehäusedeckel, und der Verriegelungskolben eine mit Druck beaufschlagbare zweite Druckkammer begrenzt. Bei Druckbeaufschlagung der zweiten Druckkammer wird der Verriegelungskolben entgegen Federkraft des zweiten Federmittels, und insbesondere entgegen der Federkraft des ersten Federmittels, aus der Entriegelungslage in die Verriegelungslage bewegt, sodass das Ausgleichsteil in die Grundposition verlagert und dort verriegelt wird. Die Verriegelungslage kann entlang des gesamten Hubs des Verriegelungskolbens vorgesehen sein. Es ist denkbar, dass der Verriegelungskolben nur einen um einen Teilhub entlang der z-Achse verschoben wird, sodass der maximale Verschwenkwinkel des Ausgleichsteils begrenzbar ist. Damit ist eine stufenlose Einstellung des maximalen Verschwenkwinkels möglich.

Das erste Federmittel stützt sich vorzugsweise am Steuerkolben und am Verriegelungskolben ab. Das zweite Federmittel stützt vorzugsweise am Verriegelungskolben und am Anschlussgehäuse ab.

Eine weitere vorteilhafte Weiterbildung sieht vor, dass die Winkelausgleichseinheit eine Sensorvorrichtung mit einem Positionssensor zum Erfassen der Position des Verriegelungskolbens und/oder des Steuerkolbens und/oder des Lagerrahmens und/oder des Lagerflanschs und/oder des Ausgleichsteils und/oder mit einem Präsenzsensor zum Erfassen des Vorhandenseins eines Bauteils an dem Ausgleichsteil aufweist.

Es ist vorteilhaft, wenn die Winkelausgleichseinheit eine Steuerungs- und/oder Regelungsvorrichtung aufweist. Die Sensorvorrichtung überträgt vorzugsweise die Sensordaten an die Steuerungs- und/oder Regelungsvorrichtung. Die Steuerungs- und/oder Regelungsvorrichtung vorzugsweise steuert die Druckbeaufschlagung der ersten Druckkammer und/oder der zweiten Druckkammer in Abhängigkeit der empfangenen Sensordaten. Ferner bestimmt die Steuerungs- und/oder Regelungsvorrichtung vorzugsweise die auf das Ausgleichsteil wirkenden Kräfte und/oder Momente in Abhängigkeit der Lageabweichung der Ausgleichsposition von der Grundposition.

Zum Begrenzen des Verschwenkwinkels des Ausgleichsteils ist vorzugsweise am Ausgleichsteil wenigstens ein Endanschlag vorgesehen, welcher im maximalen Verschwenkwinkel eine Unterseite des Grundteils, insbesondere eine Unterseite des Kardangehäuses, kontaktiert. Vorzugsweise ist weist der wenigstens eine Endanschlag eine kegelförmige Schräge auf. Die Schräge verjüngt sich vorzugsweise entlang der z-Achse hin zum Grundteil.

Die der Erfindung zugrundeliegende Aufgabe wird ebenfalls durch eine Spann- und/oder Greifvorrichtung mit den Merkmalen des Anspruchs 19 gelöst. Die Spann- und/oder Greifvorrichtung weist eine zuvor beschriebene Winkelausgleicheinheit auf.

Die der Erfindung zugrundeliegende Aufgabe wird ebenfalls durch eine Handhabungsvorrichtung mit den Merkmalen des Anspruchs 20 gelöst. Die Handhabungsvorrichtung weist eine zuvor beschriebene Winkelausgleicheinheit und/oder eine zuvor beschriebene Spann- und/oder Greifvorrichtung auf.

Weitere Einzelheiten und vorteilhafte Ausgestaltungen der Erfindung sind der nachfolgenden Beschreibung zu entnehmen, anhand derer Ausführungsbeispiele der Erfindung weiter beschrieben und erläutert sind.

### Figurenbeschreibung

Es zeigen:
- Fig. 1.: eine perspektivische Ansicht einer Winkelausgleichseinheit;
- Fig. 2.: eine Explosionsansicht der Winkelausgleichseinheit gemäß Fig. 1;
- Fig. 3.: eine weitere Explosionsansicht der Winkelausgleichseinheit gemäß Fig. 1;
- Fig. 4.: eine perspektivische Ansicht eines Kardangehäuses der Winkelausgleichseinheit gemäß Fig. 1;
- Fig. 5.: eine Schnittansicht der Winkelausgleichseinheit gemäß Fig. 1, wobei das Ausgleichsteil in der Grundposition angeordnet ist;
- Fig. 6.: eine Schnittansicht der Winkelausgleichseinheit gemäß Fig. 1, wobei das Ausgleichsteil in der Ausgleichsposition angeordnet ist;
- Fig. 7.: eine Schnittansicht der Winkelausgleichseinheit gemäß Fig. 1, wobei der Verriegelungskolben in der Verriegelungslage angeordnet ist;
- Fig. 8.: eine weitere Schnittansicht der Winkelausgleichseinheit gemäß Fig. 1, wobei das Ausgleichsteil in der Grundposition angeordnet ist;
- Fig. 9.: eine weitere Schnittansicht der Winkelausgleichseinheit gemäß Fig. 1, wobei das Ausgleichsteil in der Ausgleichsposition angeordnet ist; und
- Fig. 10.: eine weitere Schnittansicht der Winkelausgleichseinheit gemäß Fig. 1, wobei der Verriegelungskolben in der Verriegelungslage angeordnet ist.

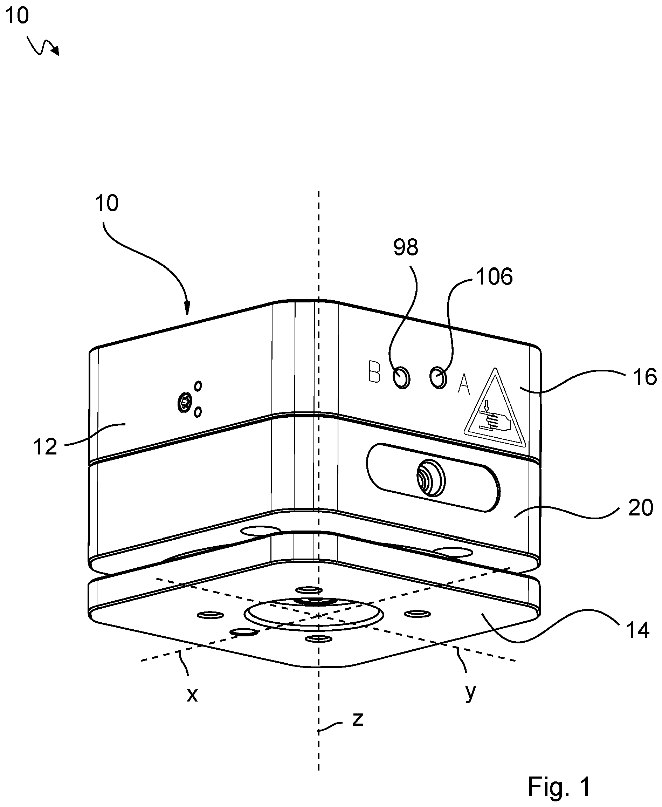

Die Winkelausgleichseinheit 10 dient zur Anordnung an eine nicht dargestellte Handhabungsvorrichtung, wobei die Winkelausgleichseinheit 10 zwischen einem nicht dargestellten Handhabungsgerät, insbesondere eine Roboterarm, und einem nicht dargestellten Werkzeug, insbesondere ein Greifer, anordenbar ist. Die Winkelausgleichseinheit 10 weist gemäß Fig. 1 ein Grundteil 12 und ein Ausgleichsteil 14 auf, wobei das Ausgleichsteil 14 relativ zum Grundteil 12 um eine x-Achse und um eine senkrecht zur x-Achse verlaufende y-Achse zwischen einer Grundposition und einer Ausgleichsposition verschwenkbar ist.

In der Grundposition ist das Ausgleichsteil 14 gemäß Fig. 1 senkrecht zu einer z-Achse angeordnet. Die z-Achse verläuft senkrecht zur x-Achse und zur y-Achse. In der Ausgleichsposition ist das Ausgleichsteil 14 nicht senkrecht, sondern schräg zur z-Achse angeordnet.

Das Grundteil 12 weist gemäß Fig. 1 ein quaderförmiges Anschlussgehäuse 16 und ein an das Anschlussgehäuse 16 angrenzendes, quaderförmiges Kardangehäuse 20 auf, wobei das Kardangehäuse 20 bewegungsfest mit dem Anschlussgehäuse 16 verbunden, insbesondere verschraubt, ist. Das Anschlussgehäuse 16 dient zur Anordnung an eine Handhabungsvorrichtung. Das Ausgleichsteil 14 dient zur Anordnung an ein Werkzeug. Das Anschlussgehäuse 16 ist mittels eine Gehäusedeckels 18 verschlossen.

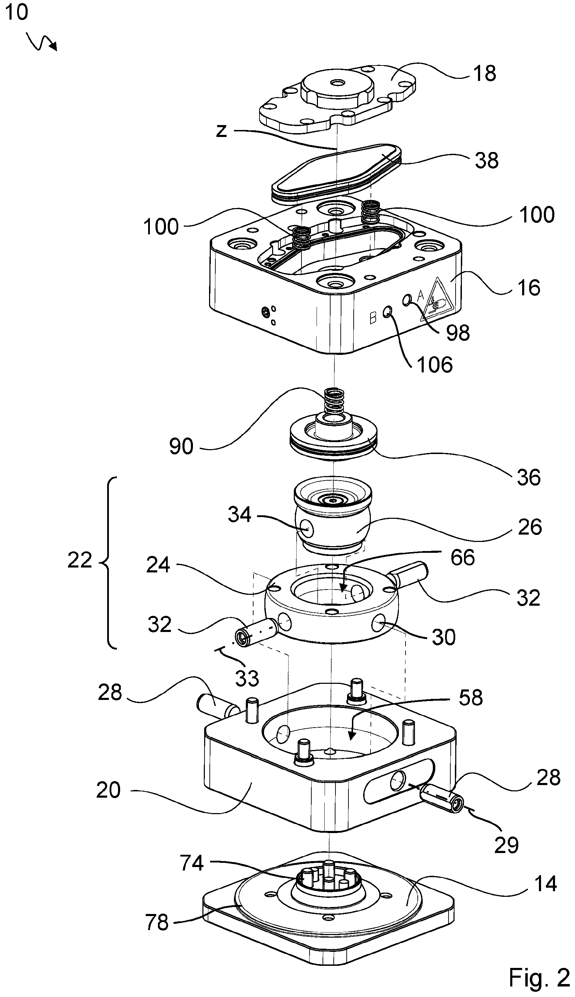

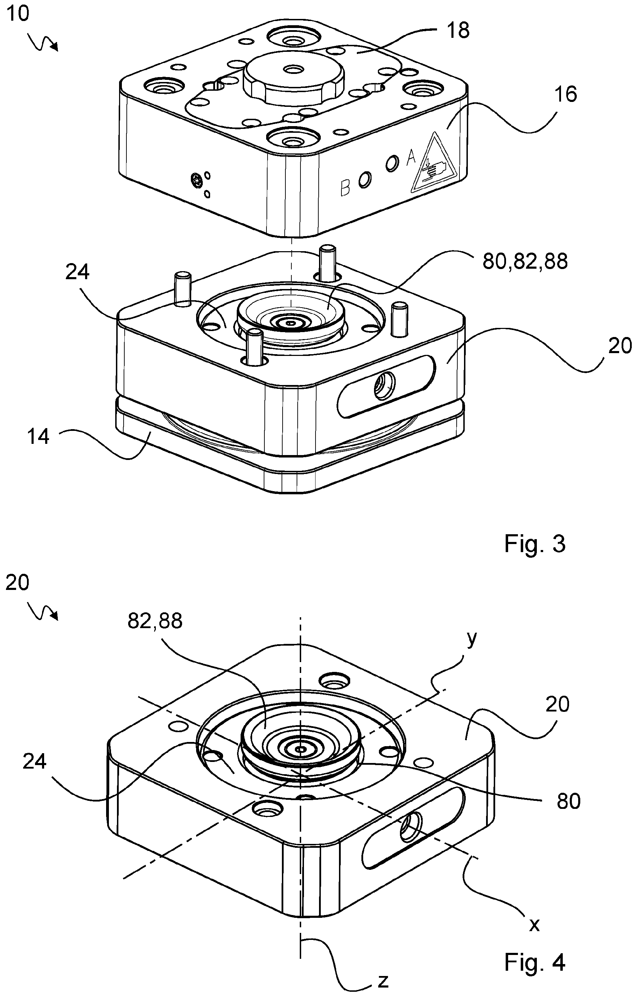

Das Ausgleichsteil 14 und das Grundteil 12 sind gemäß der Fig. 2 bis 10 mittels eines Kardangelenks 22 miteinander beweglich verbunden. Das Kardangelenk 22 ist im Kardangehäuse 20 angeordnet. Das Kardangelenk 22 weist gemäß Fig. 2 einen rotationssymmetrischen Lagerrahmen 24 und einen rotationssymmetrischen Lagerflansch 26 auf. Der Lagerrahmen 24 ist mittels erster Drehbolzen 28 im Kardangehäuse 20 um ein erste Drehachse 29 drehbar gelagert, wobei die erste Drehachse 29 entlang der x-Achse verläuft. Der Lagerrahmen 24 weist zur Aufnahme der ersten Drehbolzen 28 erste Bolzenaufnahmen 30 auf. Der Lagerflansch 26 ist mittels zweiter Drehbolzen 32 im Lagerrahmen 24 um eine zweite Drehachse 33 drehbar gelagert, wobei die zweite Drehachse 33 entlang der y-Achse verläuft. Die erste Drehachse 29 und die zweite Drehachse 33 verlaufen in einer gemeinsamen Drehachsenebene 35. Der Lagerflansch 26 weist zur Aufnahme der zweiten Drehbolzen 32 zweite Bolzenaufnahmen 34 auf. Der Lagerflansch 26 ist bewegungsfest mit dem Ausgleichsteil 14 verbunden. Demnach bewirkt ein Verschwenken des Lagerflanschs 26 auch ein Verschwenken des Ausgleichsteils 14 und vice versa.

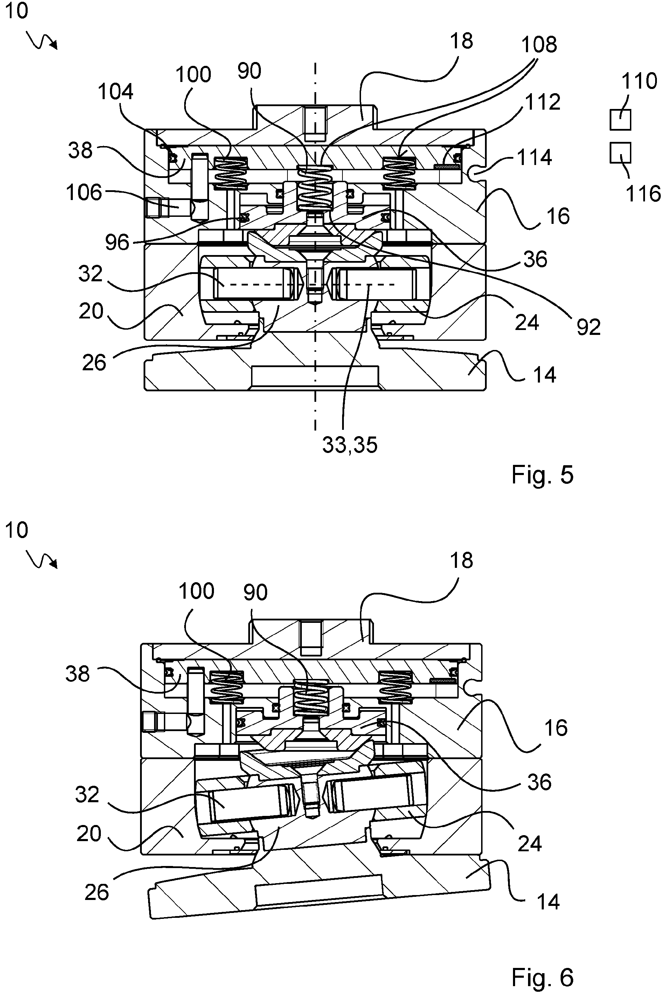

Zum stufenlosen Einstellen des zu überwindenden Verschwenkmoments weist die Winkelausgleichseinheit 10 gemäß den Fig. 5 bis 10 einen, insbesondere pneumatisch und/oder hydraulisch angetriebenen, rotationssymmetrischen Steuerkolben 36, welcher den Lagerflansch 26 in die Nullstellung und damit das Ausgleichsteil 14 in die Grundposition drängt. Zum Verriegeln des Ausgleichsteils 14 weist die Winkelausgleichseinheit 10 einen, insbesondere pneumatisch und/oder hydraulisch angetriebenen, Verriegelungskolben 38 auf, welche den Lagerflansch 26 in die Nullstellung drängt und das Ausgleichsteil 14 in der Grundposition verriegelt.

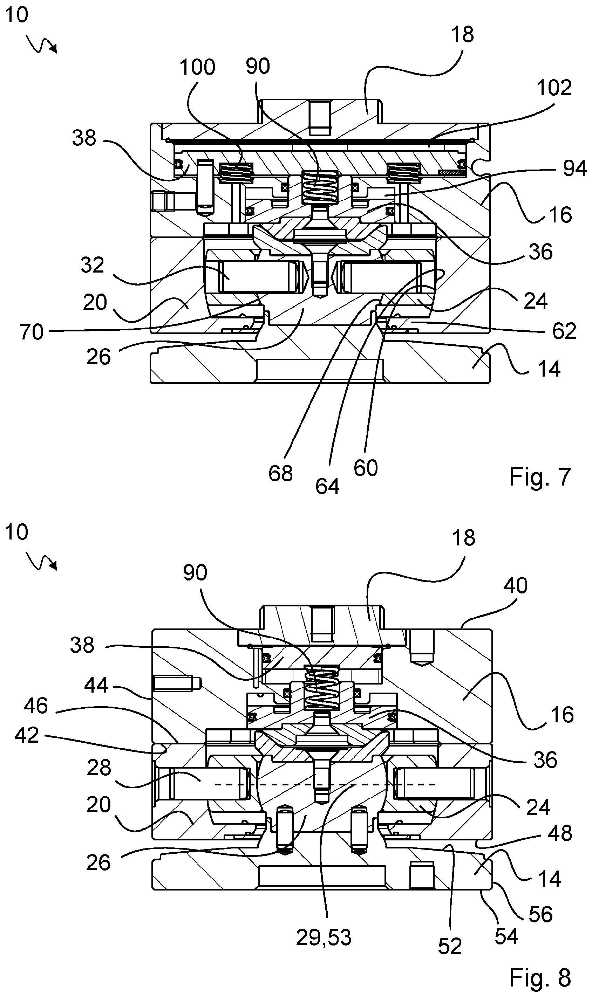

Das Anschlussgehäuse 16 weist gemäß Fig. 8 eine Anschlussgehäuseoberseite 40, eine gegenüberliegende Anschlussgehäuseunterseite 42 und eine Anschlussgehäusemantelseite 44 auf. Das Kardangehäuse weist eine Kardangehäuseoberseite 46, eine gegenüberliegende Kardangehäuseunterseite 48 und eine Kardangehäusemantelseite 50 auf. Das Ausgleichsteil 14 weist eine Ausgleichsteiloberseite 52, eine gegenüberliegende Ausgleichsteilunterseite 54 und eine Ausgleichsteilmantelseite 56 auf. Im montierten Zustand ist die Anschlussgehäuseoberseite 40 der Handhabungsvorrichtung, die Anschlussgehäuseunterseite 42 der Kardangehäuseoberseite 46, die Kardangehäuseunterseite 48 der Ausgleichsteiloberseite 52 sowie die Ausgleichsteilunterseite 54 dem Werkzeug zugewandt. Die Anschlussgehäuseoberseite 40 wird im Wesentlichen vom Gehäusedeckel 18 gebildet.

Das Kardangehäuse 20 ist gemäß den Fig. 2 bis 10 topfförmig ausgebildet und weist eine zentrale Ausnehmung 58 auf, in welcher das Kardangelenk 22 im montierten Zustand angeordnet ist. Zur Führung des Lagerrahmens 24 im Kardangehäuse 20 weist das Kardangehäuse 20 gemäß Fig. 7 eine erste Führungsfläche 60 auf, welche in einem oberen ersten Abschnitt parallel zur z-Achse verläuft und einem unteren zweiten Abschnitt entlang einer Kugeloberfläche oder einer Kegeloberfläche verläuft. Die erste Führungsfläche 60 wird durch einen Kardangehäuseboden 62 begrenzt, welcher im Wesentlichen die Kardangehäuseunterseite 48 bildet.

Der Lagerrahmen 24 weist gemäß Fig. 7 erste eine Außenfläche 64 auf, welche an der ersten Führungsfläche 60 zur Anlage kommt. Die erste Außenfläche 64 verläuft entlang einer Kugeloberfläche. Der Lagerrahmen 24 weist ferner eine Flanschaufnahme 66 zur Aufnahme des Lagerflanschs 26 mit einer zweiten Führungsfläche 68 auf, welche ebenfalls entlang einer Kugeloberfläche verläuft. Der Lagerrahmen 24 ist in einer Schnittansicht senkrecht zur z-Achse, wie in den Fig. 5 bis 10, kreisringförmig ausgebildet. Der Lagerflansch 26 weist eine zweite Außenfläche 70 auf, welche entlang einer Kugeloberfläche verläuft und an der zweiten Führungsfläche 68 zur Anlage kommt. Zur Rotation des Lagerflanschs 26 um die x-Achse gleitet die erste Außenfläche 64 an der ersten Führungsfläche 60. Zur Rotation des Lagerflanschs 26 um die y-Achse gleitet die zweite Außenfläche 70 an der zweiten Führungsfläche 68.

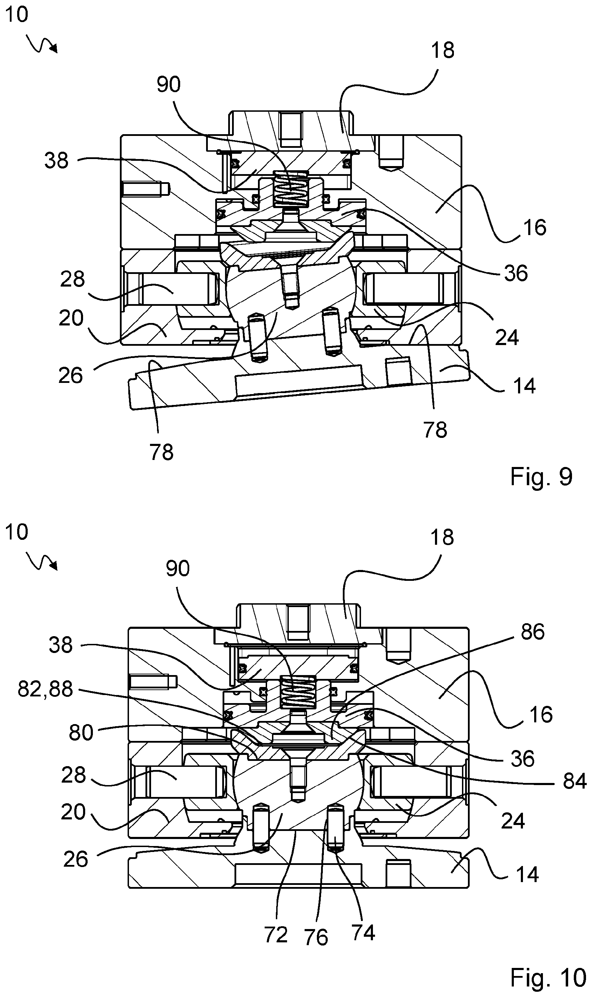

Der Lagerflansch 26 weist gemäß Fig. 10 an einer Flanschunterseite 72 zur Aufnahme von an der Ausgleichsteiloberseite 52 angeordneten Befestigungsmitteln 74 mehrere Befestigungsaufnahmen 76 auf. Mittels der Befestigungsmittel 74 und der Befestigungsaufnahmen 76 sind das Ausgleichsteil 14 und der Lagerflansch 26 bewegungsfest miteinander verbunden.

Zur Montage des Kardangelenks 22 wird gemäß Fig. 2 zunächst der Lagerflansch 26 in die Flanschaufnahme 66 des Lagerrahmens 24 eingeführt. Im Anschluss werden über die erste Außenfläche 64 des Lagerrahmens 24 die zweiten Drehbolzen 32 in die zweiten Bolzenaufnahmen 34 eingeführt. Im Anschluss wird der Lagerrahmen 24 samt dem Lagerflansch 26 in die zentrale Ausnehmung 58 des Kardangehäuses 20 eingeführt. Dann werden über die Kardangehäusemantelseite 50 die ersten Drehbolzen 28 in die ersten Bolzenaufnahmen 30 eingeführt. Danach wird das Ausgleichsteil 14 und der Lagerflansch 26 miteinander verbunden.

Zum Begrenzen des maximalen Verschwenkwinkels weist das Ausgleichsteil 14 gemäß Fig. 9 an der Ausgleichsteiloberseite 52 einen Endanschlag 78 auf, welcher als kegelförmige Schräge ausgebildet ist, wobei die Schräge sich zum Grundteil 12 hin verjüngt. Der Endanschlag 78 kommt mit der Kardangehäuseunterseite 48 in der Ausgleichsposition zur Anlage, wenn der maximale Verschwenkwinkel durch das Ausgleichsteil 14 erreicht wurde.

An einer Flanschoberseite 80 des Lagerflanschs 26 ist gemäß Fig. 10 eine Flanschfläche 82 vorgesehen, welche eine Steuerfläche 84 des Steuerkolbens 36 zum Rückstellen des Ausgleichsteils 14 in die Grundposition kontaktiert und mit dieser zusammenwirkt. Die Steuerfläche 84 ist durch einen entlang der z-Achse hervorstehenden Dorn 86 gebildet. Die Flanschfläche 82 ist durch eine entlang der z-Achse zurückstehende Tasche 88 gebildet. Es ist auch denkbar, dass die Tasche 88 am Steuerkolben 36 und der Dorn 86 am Lagerflansch 26 angeordnet sind. Der Dorn 86 und die Tasche 88 sind kegelförmig und komplementär zueinander ausgebildet. Die Kegelflächen ermöglichen eine größere Kraftübertragung und damit ein höheres Verriegelungsmoment. Die Tasche 88 verjüngt sich weg vom Dorn 86. Der Dorn 86 verjüngt sich hin zur Tasche 88. Der Dorn 86 und die Tasche 88 sind als zum Steuerkolben 36 und/oder zum Lagerflansch 26 separat ausgebildete Einsätze ausgebildet. Der Dorn 86 und die Tasche 88 sind aus einem anderen Material, insbesondere aus einem verschleißfesten Material, als der Steuerkolben 36 und der Lagerflansch 26 hergestellt, welche aus einem leichten Material hergestellt sind. Die Einsätze sind als Verschleißeinsätze ausgebildet.

Zum Steuern des Verriegelungsmoments wird der Steuerkolben 36 entlang der z-Achse aus einer oberen Freigabelage in eine untere Steuerlage verlagert. Dabei wirken der Dorn 86 und die Tasche 88 derart miteinander zusammen, dass der Lagerflansch 26 zentriert wird und das Ausgleichsteil 14 in die Grundposition verlagert wird. Zum Verschwenken des Ausgleichsteils 14 muss das durch den Steuerkolben 36 resultierende Verschwenkmoment bzw. Aktivierungsmoment von der am Ausgleichsteil 14 angreifenden Kraft überwunden werden. Zur Rückstellung des Steuerkolbens 36 in die Steuerlage ist ein erstes Federmittel 90, insbesondere eine Druckfeder, vorgesehen. Folglich wird der Steuerkolben 36 auch im energielosen Zustand in die Steuerlage bewegt und damit wird auch das Ausgleichsteil 14 im energielosen Zustand in die Grundposition zurückgestellt. Das erste Federmittel 90 erstreckt sich entlang der z-Achse und stützt sich am Steuerkolben 36 und am Verriegelungskolben 38 ab. Dazu sind gemäß Fig. 5 am Steuerkolben 36 und am Verriegelungskolben 38 erste Federaufnahmen 92 vorgesehen. Zum stufenlosen Einstellen des Verschwenkmoments begrenzt der Steuerkolben 36 und das Anschlussgehäuse 16 eine erste Druckkammer 94. Die erste Druckkammer 94 wird durch am Anschlussgehäuse 16 und am Steuerkolben 36 angeordnete erste Dichtmittel 96 abgedichtet. Die erste Druckkammer 94 ist mittels wenigstens einer ersten Druckleitung 98 mit einem Druck beaufschlagbar, wobei die erste Druckleitung 98 in der Anschlussgehäusemantelseite 44 mündet. Bei Druckbeaufschlagung der ersten Druckkammer 94 wird der Steuerkolben 36 zusätzlich zur Federkraft des ersten Federmittels 90 aus der Freigabelage in die Steuerlage bewegt, sodass das Ausgleichsteil 14 in die Grundposition verlagert wird. Zum Verschwenken des Ausgleichsteils 14 in die Ausgleichsrichtung muss zunächst das durch den Steuerkolben 36 und das erste Federmittel 90 bewirkte Verschwenkmoment überwunden werden. Damit ist eine stufenlose Einstellung des Verschwenkmoments möglich. Eine derartig stufenlose Einstellung ist besonders bei horizontalen Anwendungen oder Massenschwerpunkten der Werkzeuge, die nicht auf einer z-Achse mit dem Ausgleichsteil 14 liegen, wichtig.

Zum Verriegeln des Ausgleichsteils 14 in der Grundposition bzw. des Kardangelenks 22 in der Nullstellung ist der Verriegelungskolben 38 entlang der z-Achse zwischen einer oberen Entriegelungslage und einer unteren Verriegelungslage verschieblich. In der Verriegelungslage ist ein Winkelausgleich mittels des Ausgleichsteils 14 nicht möglich. In der Entriegelungslage ist ein Winkelausgleich mittels des Ausgleichsteils 14 möglich. Der Verriegelungskolben 38 ist im Wesentlichen im Querschnitt senkrecht zur z-Achse rautenförmig mit abgerundeten Ecken ausgebildet, wobei dieser entlang der y-Achse gestreckt ist und entlang der x-Achse gestaucht ist. Zur Rückstellung des Verriegelungskolbens 38 in die Entriegelungslage ist ein zweites Federmittel 100, insbesondere zwei Druckfedern, vorgesehen. Folglich wird der Verriegelungskolben 38 im energielosen Zustand in die Entriegelungslage bewegt und damit ist das Ausgleichsteil 14 im energielosen Zustand entriegelt und somit in die Ausgleichsposition verschwenkbar.

Das Grundteil 12, insbesondere das Anschlussgehäuse 16 und der Gehäusedeckel 18, und der Verriegelungskolben 38 begrenzen gemäß Fig. 7 eine mit Druck beaufschlagbare zweite Druckkammer 102. Die zweite Druckkammer 102 wird durch am Anschlussgehäuse 16 und am Steuerkolben 36 angeordnete zweite Dichtmittel 104 abgedichtet. Die zweite Druckkammer 102 ist mittels wenigstens einer zweiten Druckleitung 106 mit einem Druck beaufschlagbar, wobei die zweite Druckleitung 106 in der Anschlussgehäusemantelseite 44 mündet. Bei Druckbeaufschlagung der zweiten Druckkammer 102 wird der Verriegelungskolben 38 entgegen der Federkraft des zweiten Federmittels 100 und des ersten Federmittels 90 aus der Entriegelungslage in die Verriegelungslage bewegt, sodass das Ausgleichsteil 14 in die Grundposition verlagert und dort verriegelt wird. Das zweite Federmittel 100 erstreckt sich entlang der z-Achse und stützt sich am Verriegelungskolben 38 und am Anschlussgehäuse 16 ab. Dazu sind am Verriegelungskolben 38 und am Anschlussgehäuse 16 gemäß Fig. 5 zweite Federaufnahmen 108 vorgesehen. Die Verriegelungslage kann entlang des gesamten Hubs des Verriegelungskolbens 38 vorgesehen sein. Es ist denkbar, dass der Verriegelungskolben nur einen um einen Teilweg entlang der z-Achse verschoben wird, sodass das Ausgleichsteil 14 nicht vollständig verriegelt wird, sondern nur der maximale Verschwenkwinkel des Ausgleichsteils 14 über den Endanschlag 78 hinaus begrenzbar ist. Damit ist zudem eine stufenlose Einstellung des maximalen Verschwenkwinkels möglich.

Die Winkelausgleichseinheit 10 weist ferner gemäß Fig. 5 eine Sensorvorrichtung 110 mit einem Positionssensor zum Erfassen der Position des Verriegelungskolbens 38 und/oder des Steuerkolbens 36 und/oder des Lagerrahmens 24 und/oder des Lagerflanschs 26 und/oder des Ausgleichsteils 14 und/oder mit einem Präsenzsensor zum Erfassen des Vorhandenseins eines Bauteils an dem Ausgleichsteil 14 auf. Ein Positionssensor zum Erfassen der Position des Verriegelungskolbens 38 weist einen im Verriegelungskolben 38 angeordneten Signalgeber 112 und einen in einer an der Anschlussgehäusemantelseite 44 vorgesehene Sensornut 114 angeordneten Signalnehmer auf. Der Signalgeber 112 ist vorzugsweise in einer Mantelseite des Verriegelungskolbens 38 angeordnet. Der Signalgeber 112 gelangt in den Wirkbereich des Signalnehmers, sobald der Verriegelungskolben 38 in der Verriegelungslage angeordnet ist. Demnach erkennt der Positionssensor die Verriegelung des Ausgleichsteil 14. Es ist aber auch denkbar, dass der Positionssensor den gesamten Hub des Verriegelungskolbens 38 erfassen kann.

Die Winkelausgleichseinheit 10 weist ferner gemäß Fig. 5 eine Steuerungs- und/oder Regelungsvorrichtung 116 auf. Die Sensorvorrichtung 110 überträgt die Sensordaten des wenigstens einen Sensors an die Steuerungs- und/oder Regelungsvorrichtung 116. Die Steuerungs- und/oder Regelungsvorrichtung 116 steuert die Druckbeaufschlagung der ersten Druckkammer 94 und/oder der zweiten Druckkammer 102 in Abhängigkeit der empfangenen Sensordaten. Ferner bestimmt die Steuerungs- und/oder Regelungsvorrichtung die auf das Ausgleichsteil 14 wirkenden Kräfte und/oder Momente in Abhängigkeit der Lageabweichung der Ausgleichsposition von der Grundposition.

### Bezugszeichenliste

- 10: Winkelausgleichseinheit
- 12: Grundteil
- 14: Ausgleichsteil
- 16: Anschlussgehäuse
- 18: Gehäusedeckel
- 20: Kardangehäuse
- 22: Kardangelenk
- 24: Lagerrahmen
- 26: Lagerflansch
- 28: erster Drehbolzen
- 29: erste Drehachse
- 30: erste Bolzenaufnahme
- 32: zweiter Drehbolzen
- 33: zweite Drehachse
- 34: zweite Bolzenaufnahme
- 35: Drehachsenebene
- 36: Steuerkolben
- 38: Verriegelungskolben
- 40: Anschlussgehäuseoberseite
- 42: Anschlussgehäuseunterseite
- 44: Anschlussgehäusemantelseite
- 46: Kardangehäuseoberseite
- 48: Kardangehäuseunterseite
- 50: Kardangehäusemantelseite
- 52: Ausgleichsteiloberseite
- 54: Ausgleichsteilunterseite
- 56: Ausgleichsteilmantelseite
- 58: zentrale Ausnehmung
- 60: erste Führungsfläche
- 62: Kardangehäuseboden
- 64: erste Außenfläche
- 66: Flanschaufnahme
- 68: zweite Führungsfläche
- 70: zweite Außenfläche
- 72: Flanschunterseite
- 74: Befestigungsmittel
- 76: Befestigungsaufnahme
- 78: Endanschlag
- 80: Flanschoberseite
- 82: Flanschfläche
- 84: Steuerfläche
- 86: Dorn
- 88: Tasche
- 90: erstes Federmittel
- 92: erste Federaufnahme
- 94: erste Druckkammer
- 96: erstes Dichtmittel
- 98: ersten Druckleitung
- 100: zweites Federmittel
- 102: zweite Druckkammer
- 104: zweites Dichtmittel
- 106: zweite Druckleitung
- 108: zweite Federaufnahme
- 110: Sensorvorrichtung
- 112: Signalgeber
- 114: Sensornut
- 116: Steuerungs- und/oder Regelungsvorrichtung

## Patentansprüche

1. Winkelausgleichseinheit (10) für eine
Handhabungsvorrichtung mit einem Grundteil (12), mit einem Ausgleichsteil (14), mit einem Steuerkolben (36) zum Steuern des Verschwenkmoments und mit einem Verriegelungskolben (38) zum Verriegeln des Ausgleichsteils (14),
wobei das Ausgleichsteil (14) relativ zum Grundteil (12) um eine x-Achse und um eine senkrecht zur x-Achse verlaufende y-Achse zwischen einer Grundposition und einer Ausgleichsposition verschwenkbar ist,
wobei im Grundteil (12) ein Lagerrahmen (24) und ein Lagerflansch (26) angeordnet sind,
wobei der Lagerrahmen (24) im Grundteil (12) um die x-Achse drehbar gelagert ist,
wobei der Lagerflansch (26) im Lagerrahmen (24) um die y-Achse drehbar gelagert ist,
wobei der Steuerkolben (36) entlang einer senkrecht zur x-Achse und zur y-Achse verlaufenden z-Achse zwischen einer Steuerlage und einer Freigabelage verschieblich ist,
wobei der Verriegelungskolben (38) entlang der z-Achse zwischen einer Entriegelungslage und einer Verriegelungslage verschieblich ist,
wobei der Verriegelungskolben (38) in der Verriegelungslage den Steuerkolben (36) in die Richtung der Steuerlage drängt, und wobei der Steuerkolben (36) das Ausgleichsteil (14) verriegelt.

2. Winkelausgleichseinheit (10) nach Anspruch 1, wobei das Ausgleichsteil (14) bewegungsfest mit dem Lagerflansch (26) verbunden ist.

3. Winkelausgleichseinheit (10) nach Anspruch 1 oder 2, wobei der Lagerrahmen (24) eine entlang der x-Achse verlaufende erste Drehachse (29) und der Lagerflansch (26) eine entlang der y-Achse verlaufende zweite Drehachse (33) aufweist, und wobei die erste Drehachse (29) und die zweite Drehachse (33) in einer Drehachsenebene (35) liegen.

4. Winkelausgleichseinheit (10) nach einem der vorherigen Ansprüche, wobei der Lagerrahmen (24) mittels erster Drehbolzen (28) im Grundteil (12) und/oder der Lagerflansch (26) mittels zweiter Drehbolzen (32) im Lagerrahmen (24) drehbar gelagert sind.

5. Winkelausgleichseinheit (10) nach einem der vorherigen Ansprüche, wobei der Lagerrahmen (24) ringförmig und/oder der Lagerflansch (26) teilkugelförmig ausgebildet sind.

6. Winkelausgleichseinheit (10) nach einem der vorherigen Ansprüche, wobei ein erstes Federmittel (90) zur Rückstellung des Steuerkolbens (36) in die Steuerlage vorgesehen ist.

7. Winkelausgleichseinheit (10) nach einem der vorherigen Ansprüche, wobei am Steuerkolben (36) ein hervorstehender Dorn (86) und am Lagerflansch (26) eine in der Steuerlage mit dem Dorn (86) zusammenwirkende Tasche (88) vorgesehen ist oder wobei am Lagerflansch (26) ein hervorstehender Dorn (86) und am Steuerkolben (36) eine in der Steuerlage mit dem Dorn (86) zusammenwirkende Tasche (88) vorgesehen sind.

8. Winkelausgleichseinheit (10) nach Anspruch 7, wobei der Dorn (86) und/oder die Tasche (88) kegelförmig und/oder komplementär zueinander ausgebildet sind.

9. Winkelausgleichseinheit (10) nach einem der Ansprüche 7 oder 8, wobei der Dorn (86) und/oder die Tasche (86) als Einsätze ausgebildet sind.

10. Winkelausgleichseinheit (10) nach einem der vorherigen Ansprüche, wobei das Grundteil (12) und der Steuerkolben (36) eine mit Druck beaufschlagbare erste Druckkammer (94) begrenzen, sodass bei Druckbeaufschlagung der ersten Druckkammer (94) das Ausgleichsteil (14) zentriert ist.

11. Winkelausgleichseinheit (10) nach einem der vorherigen Ansprüche, wobei ein zweites Federmittel (100) zur Rückstellung des Verriegelungskolbens (38) in die Entriegelungslage vorgesehen ist.

12. Winkelausgleichseinheit (10) nach einem der vorherigen Ansprüche, wobei das Grundteil (12) und der Verriegelungskolben (38) eine mit Druck beaufschlagbare zweite Druckkammer (102) begrenzen, sodass bei Druckbeaufschlagung der zweiten Druckkammer (102) das Ausgleichsteil (14) verriegelt wird.

13. Winkelausgleichseinheit (10) nach einem der Ansprüche 11 bis 12, wobei sich die ersten Federmittel (90) einerseits am Steuerkolben (36) und andererseits am Verriegelungskolben (38) abstützen und/oder wobei sich die zweiten Federmittel (100) einerseits am Verriegelungskolben (38) und andererseits am Grundteil (12) abstützen.

14. Winkelausgleichseinheit (10) nach einem der vorherigen Ansprüche, wobei diese eine Sensorvorrichtung (110) mit einem Positionssensor zum Erfassen der Position des Verriegelungskolbens (38) und/oder des Steuerkolbens (36) und/oder des Lagerrahmens (24) und/oder des Lagerflanschs (26) und/oder des Ausgleichsteils (14) und/oder mit einem Präsenzsensor zum Erfassen des Vorhandenseins eines Bauteils an dem Ausgleichsteil (14) aufweist.

15. Winkelausgleichseinheit (10) nach einem der vorherigen Ansprüche, wobei zum Begrenzen des Verschwenkwinkels des Ausgleichsteils (14) am Ausgleichsteil (14) wenigstens ein Endanschlag (78) vorgesehen ist, welcher in einer maximalen Ausgleichsposition eine Unterseite des Grundteils (12) kontaktiert.

16. Spann- und/oder Greifvorrichtung mit einer Winkelausgleichseinheit (10) nach einem der vorherigen Ansprüche.

17. Handhabungsvorrichtung mit einer Winkelausgleichseinheit (10) nach einem der Ansprüche 1 bis 15 und/oder mit einer Spann- und/oder Greifvorrichtung nach Anspruch 16.

## Claims

1. Angle compensation unit (10) for a handling device, which angle compensation unit comprises a base part (12), a compensating part (14), a control piston (36) for controlling the pivoting torque and a locking piston (38) for locking the compensating part (14),
wherein the compensating part (14) can be pivoted relative to the base part (12) about an x-axis and about a y-axis running perpendicular to the x-axis between a basic position and a compensating position,
wherein a bearing frame (24) and a bearing flange (26) are arranged in the base part (12),
wherein the bearing frame (24) is mounted in the base part (12) so that it can rotate about the x-axis,
wherein the bearing flange (26) is mounted in the bearing frame (24) so that it can rotate about the y-axis,
wherein the control piston (36) is movable along a z-axis running perpendicular to the x-axis and to the y-axis between a control position and a release position,
wherein the locking piston (38) is movable along the z-axis between an unlocked position and a locking position,
wherein the locking piston (38) in the locking position pushes the control piston (36) in the direction of the control position, and wherein the control piston (36) locks the compensating part (14).

2. Angle compensation unit (10) according to claim 1, wherein the compensating part (14) is connected to the bearing flange (26) in a manner preventing movement.

3. Angle compensation unit (10) according to claim 1 or 2, wherein the bearing frame (24) has a first axis of rotation (29) running along the x-axis and the bearing flange (26) has a second axis of rotation (33) running along the y-axis, and wherein the first axis of rotation (29) and the second axis of rotation (33) lie in an axis of rotation plane (35).

4. Angle compensation unit (10) according to any of the preceding claims, wherein the bearing frame (24) is rotatably mounted in the base part (12) by means of first pivot pins (28) and/or the bearing flange (26) is rotatably mounted in the bearing frame (24) by means of second pivot pins (32).

5. Angle compensation unit (10) according to any of the preceding claims, wherein the bearing frame (24) is ring-shaped and/or the bearing flange (26) is partially spherical.

6. Angle compensation unit (10) according to any of the preceding claims, wherein a first spring means (90) is provided for returning the control piston (36) to the control position.

7. Angle compensation unit (10) according to any of the preceding claims, wherein a protruding mandrel (86) is provided on the control piston (36), and a pocket (88) cooperating with the mandrel (86) in the control position is provided on the bearing flange (26), or wherein a protruding mandrel (86) is provided on the bearing flange (26) and a pocket (88) cooperating with the mandrel (86) in the control position is provided on the control piston (36).

8. Angle compensation unit (10) according to claim 7, wherein the mandrel (86) and/or the pocket (88) are conical and/or complementary to one another.

9. Angle compensation unit (10) according to either of claims 7 or 8, wherein the mandrel (86) and/or the pocket (86) are designed as inserts.

10. Angle compensation unit (10) according to any of the preceding claims, wherein the base part (12) and the control piston (36) delimit a pressurizable first pressure chamber (94), such that when the first pressure chamber (94) is pressurized, the compensating part (14) is centered.

11. Angle compensation unit (10) according to any of the preceding claims, wherein a second spring means (100) is provided for returning the locking piston (38) to the unlocked position.

12. Angle compensation unit (10) according to any of the preceding claims, wherein the base part (12) and the locking piston (38) delimit a pressurizable second pressure chamber (102), such that when the second pressure chamber (102) is pressurized, the compensating part (14) is locked.

13. Angle compensation unit (10) according to any of claims 11 to 12, wherein the first spring means (90) are supported on one end on the control piston (36) and on the other end on the locking piston (38), and/or wherein the second spring means (100) are supported on one end on the locking piston (38) and on the other end on the base part (12).

14. Angle compensation unit (10) according to any of the preceding claims, wherein the angle compensation unit has a sensor device (110) having a position sensor for detecting the position of the locking piston (38) and/or the control piston (36) and/or the bearing frame (24) and/or the bearing flange (26) and/or the compensating part (14), and/or having a presence sensor for detecting the presence of a component on the compensating part (14).

15. Angle compensation unit (10) according to any of the preceding claims, wherein at least one end stop (78) is provided on the compensating part (14) to limit the pivoting angle of the compensating part (14), which end stop contacts a bottom side of the base part (12) in a maximum compensating position.

16. Clamping and/or gripping device having an angle compensation unit (10) according to any of the preceding claims.

17. Handling device having an angle compensation unit (10) according to any of claims 1 to 15 and/or having a clamping and/or gripping device according to claim 16.

## Revendications

1. Unité de compensation angulaire (10) pour un dispositif de manutention comprenant une pièce de base (12), un élément de compensation (14), un piston de commande (36) pour commander le moment de basculement et un piston de verrouillage (38) pour verrouiller l'élément de compensation (14),
où l'élément de compensation (14) est pivotant par rapport à la pièce de base (12) autour d'un axe x et autour d'un axe y perpendiculaire à l'axe x, entre une position de base et une position de compensation,
où, dans la pièce de base (12), sont disposés un cadre de palier (24) et une flasque de palier (26),
où le cadre de palier (24) est monté de manière pivotante dans la pièce de base (12) autour de l'axe x,
où la flasque de palier (26) est montée de manière pivotante dans le cadre de palier (24) autour de l'axe y,
où le piston de commande (36) est déplaçable le long d'un axe z, perpendiculaire aux axes x et y, entre une position de commande et une position de libération,
où le piston de verrouillage (38) est déplaçable le long de l'axe z entre une position de déverrouillage et une position de verrouillage,
où, en position de verrouillage, le piston de verrouillage (38) pousse le piston de commande (36) en direction de la position de commande, et où le piston de commande (36) verrouille l'élément de compensation (14).

2. Unité de compensation angulaire (10) selon la revendication 1, dans laquelle l'élément de compensation (14) est fixé de manière immobile à la flasque de palier (26).

3. Unité de compensation angulaire (10) selon la revendication 1 ou 2, dans laquelle le cadre de palier (24) comporte un premier axe de rotation (29) s'étendant le long de l'axe x et la flasque de palier (26) comporte un second axe de rotation (33) s'étendant le long de l'axe y, et où le premier axe de rotation (29) et le second axe de rotation (33) se trouvent dans un plan d'axes de rotation (35).

4. Unité de compensation angulaire (10) selon l'une quelconque des revendications précédentes, dans laquelle le cadre de palier (24) est monté de manière pivotante dans la pièce de base (12) au moyen de premiers axes de rotation (28) et/ou le flasque de palier (26) est monté de manière pivotante dans le cadre de palier (24) au moyen de seconds axes de rotation (32).

5. Unité de compensation angulaire (10) selon l'une quelconque des revendications précédentes, dans laquelle le cadre de palier (24) est annulaire et/ou le flasque de palier (26) est formé de manière partiellement sphérique.

6. Unité de compensation angulaire (10) selon l'une quelconque des revendications précédentes, dans laquelle un premier moyen à ressort (90) est prévu pour ramener le piston de commande (36) en position de commande.

7. Unité de compensation angulaire (10) selon l'une quelconque des revendications précédentes, dans laquelle sur le piston de commande (36) est prévu un ergot saillant (86) et sur le flasque de palier (26) un logement (88) coopérant avec l'ergot (86) en position de commande, ou dans laquelle sur le flasque de palier (26) est prévu un ergot saillant (86) et sur le piston de commande (36) un logement (88) coopérant avec l'ergot (86) en position de commande.

8. Unité de compensation angulaire (10) selon la revendication 7, dans laquelle l'ergot (86) et/ou le logement (88) sont coniques et/ou formés de manière complémentaire l'un de l'autre.

9. Unité de compensation angulaire (10) selon l'une quelconque des revendications 7 ou 8, dans laquelle l'ergot (86) et/ou le logement (86) sont réalisés sous forme d'inserts.

10. Unité de compensation angulaire (10) selon l'une quelconque des revendications précédentes, dans laquelle la pièce de base (12) et le piston de commande (36) délimitent une première chambre de pression (94) susceptible d'être mise sous pression, de sorte que, lorsque la première chambre de pression (94) est mise sous pression, l'élément de compensation (14) est centré.

11. Unité de compensation angulaire (10) selon l'une quelconque des revendications précédentes, dans laquelle un second moyen à ressort (100) est prévu pour ramener le piston de verrouillage (38) en position de déverrouillage.

12. Unité de compensation angulaire (10) selon l'une quelconque des revendications précédentes, dans laquelle la pièce de base (12) et le piston de verrouillage (38) délimitent une deuxième chambre de pression (102) susceptible d'être mise sous pression, de sorte que, lorsque la deuxième chambre de pression (102) est mise sous pression, l'élément de compensation (14) est verrouillé.

13. Unité de compensation angulaire (10) selon l'une quelconque des revendications 11 à 12, dans laquelle les premiers moyens à ressort (90) s'appuient d'une part sur le piston de commande (36) et d'autre part sur le piston de verrouillage (38) et/ou dans laquelle les seconds moyens à ressort (100) s'appuient d'une part sur le piston de verrouillage (38) et d'autre part sur la pièce de base (12).

14. Unité de compensation angulaire (10) selon l'une quelconque des revendications précédentes, ladite unité comportant un dispositif de capteur (110) doté d'un capteur de position destiné à détecter la position du piston de verrouillage (38) et/ou du piston de commande (36) et/ou du cadre de palier (24) et/ou de la flasque de palier (26) et/ou de l'élément de compensation (14), et/ou d'un capteur de présence destiné à détecter la présence d'une pièce sur l'élément de compensation (14).

15. Unité de compensation angulaire (10) selon l'une quelconque des revendications précédentes, dans laquelle, pour limiter l'angle d'inclinaison de l'élément de compensation (14), au moins une butée d'arrêt (78) est prévue sur l'élément de compensation (14), laquelle, en position maximale de compensation, vient en contact avec la face inférieure de la pièce de base (12).

16. Dispositif de serrage et/ou de préhension comportant une unité de compensation angulaire (10) selon l'une quelconque des revendications précédentes.

17. Dispositif de manutention comprenant une unité de compensation angulaire (10) selon l'une quelconque des revendications 1 à 15 et/ou comprenant un dispositif de serrage et/ou de préhension selon la revendication 16.
